# EUROPÄISCHE PATENTSCHRIFT

(11) **EP 0 411 240 B1**
(45) Veröffentlichungstag und Bekanntmachung des Hinweises auf die Patenterteilung: **17.08.1994**
(21) Anmeldenummer: 90104226.7
(22) Anmeldetag: 05.03.1990
(51) Int. Cl.: B01D 46/52, F02M 35/024

(54) **Filtereinsatz für in staubreichem Betrieb eingesetzten Luftfilter**
Filter element for air filter used in high dust concentration
Elément de filtrage pour un filtre à air utilisé dans une atmosphère riche en poussière

(30) Priorität: 31.07.1989 DE 3925277
(43) Veröffentlichungstag der Anmeldung: 06.02.1991
(73) Patentinhaber: FILTERWERK MANN & HUMMEL GMBH, D-71631 Ludwigsburg (DE)
(72) Erfinder: Trefz, Walter, D-7150 Backnang (DE)
(74) Vertreter: Voth, Gerhard, Dipl.-Ing.

(56) Entgegenhaltungen:
- DE-A- 3 433 622
- US-A- 4 243 397
- US-A- 4 350 509

## Beschreibung

Die Erfindung bezieht sich auf einen Filtereinsatz für Luftfilter von Brennkraftmaschinen, Kompressoren und sonstigen luftansaugenden Maschinen nach dem Oberbegriff des Anspruchs 1. Derartige Luftfiltereinsätze sollen einen hohen Abscheidungsgrad über die gesamte Einsatzzeit sowie ein großes Staubaufnahmevermögen aufweisen. Außerdem besteht die Forderung nach einem möglichst kleinen Durchflußwiderstand, der sich jedoch mit zunehmender Verschmutzung erhöht und schließlich bei Erreichen einer vorgegebenen Grenze den Austausch des Filtereinsatzes erfordert.

Zur Filterung der Ansaugluft von luftansaugenden Maschinen verwendet man im großen Umfang Filtereinsätze, bei denen das Filtermittel aus zickzackförmig gefaltetem Filterpapier besteht. Dieser Aufbau des Filtereinsatzes läßt die Anordnung verhältnismäßig großer Filterflächen auf kleinem Raum zu. Gerade bei staubreichem Betrieb, wie er beispielsweise beim Einsatz an Nutzfahrzeugen, Landmaschinen, Baumaschinen und dgl. Geräten auftritt, sind große Filterflächen erforderlich.

In der Praxis sind für staubreichen Betrieb Filterpapiere üblich, die bei einer Dicke von 0,3 bis 0,6 mm und einer Dichte von 0,2 bis 0,3 g/cm³ eine Fläche von ungefähr 4000 cm² bis 6000 cm² je Kubikmeter angesaugter Luft pro Minute aufweisen. Für staubarmen Betrieb, beispielsweise für, in aller Regel auf befestigten Straßen fahrende Personenkraftwagen, sieht man demgegenüber nur eine Papierfilterfläche in der Größenordnung von 1500 cm² je Kubikmeter angesaugter Luft pro Minute vor. Dabei wird jedoch ein offenporiges Papier verwendet.

Um einen möglichst hohen Abscheidungsgrad zu erzielen, sind bei einem Filtereinsatz gemäß der US-A-33 97 793 zwei Filterringe (Papierbälge) aus zickzackförmig gefaltetem Filterpapier mit gleicher radialer Tiefe konzentrisch zueinander angeordnet. Zwischen den beiden Filterringen befindet sich ein Stützring aus Lochblech, weitere Stützringe sind am äußeren Umfang des äußeren Filterrings und am inneren Umfang des inneren Filterrings angeordnet. Gemäß dieser Patentschrift soll das Filterpapier des inneren Filterrings mit kleineren Poren gegenüber dem Filterpapier des äußeren Filterrings ausgestattet sein, um so eine Stufenfilterung zu erreichen. Ein Nachteil dieser Anordnung ist zunächst darin zu sehen, daß insgesamt drei Stützringe erforderlich sind, wobei jeder Stützring natürlich den Durchflußwiderstand erhöht.

Es ist bekannt, daß der Anfangsabscheidungsgrad bei der hier verwendeten Art von Filterpapier unter dem mittleren Abscheidungsgrad liegt. Die Ursache für das Ansteigen des Abscheidungsgrades über die gesamte Betriebszeit ist darin zu sehen, daß sich während des Betriebs des Filters ein Filterkuchen durch Ablagerung der herausgefilterten Teilchen an dem Filterpapier bildet, welcher dann auch sehr kleine Staubteilchen zurückhält.

Wird nun aber, wie in der US Patentschrift beschrieben, ein Filterpapier mit sehr kleinen Poren verwendet, dann besteht die Gefahr, daß diese kleinen Poren schnell zugesetzt sind und damit die Standzeit wesentlich verkürzt wird. Außerdem erfordert die Anwendung eines zweiten Filterringes, welcher aus zickzackförmig gefaltetem Filterpapier besteht, einen erheblichen Platzbedarf, so daß durch diese zweite Filterstufe sich die Filterfläche des ersten Filterringes verringert und damit die geforderte Filterfläche nur durch eine Vergrößerung des Außendurchmessers des Filtereinsatzes erreicht werden kann.

Die US-A-4 243 397 beschreibt einen Filtereinsatz für Filter von Brennkraftmaschinen, Kompressoren und sonstigen luftansaugenden Maschinen mit
- einem Filterring, der aus zickzackförmig gefaltetem Filterpapier besteht und stirnseitige Endscheiben aufweist, wobei der Filterring radial durchströmt ist,
- einem weiteren Filterelement, welches konzentrisch zu dem Filterring angeordnet ist und sich innerhalb der ringförmigen Öffnung des Filterrings befindet,
- wobei das weitere Filterelement ein Vliesmantel aus Kunstfaservlies ist, welcher unmittelbar, ohne Zwischenschaltung von Stützringen, an dem Filterring anliegt,
   Der vorliegenden Erfindung liegt die Aufgabe zugrunde, die genannten Nachteile zu vermeiden und bei möglichst geringem Platzbedarf - unter Vermeidung einer zu starken Erhöhung des Durchflußwiderstandes - besonders den Anfangabscheidungsgrad eines Filtereinsatzes zu verbessern.

Diese Aufgabe ist ausgehend von dem oberbegriff des Hauptanspruchs durch folgende Merkmale gelöst:
- die Dicke des Vliesmantels das Zwei- bis Achtfache der Dicke des Filterpapiers beträgt,
- der Vliesmantel mit einem als Haftmittel wirkenden Öl versehen ist,

Es hat sich gezeigt, daß ein Vlies, welches nur einen sehr geringen Durchflußwiderstand aufweist, aufgrund seiner Eigenschaften und seiner Struktur geeignet ist, sehr kleine Staubpartikel zu binden und damit den Anfangsabscheidungsgrad erheblich zu verbessern, ohne daß die Gefahr besteht, daß dieses Vlies sich nach kurzer Zeit zusetzt und damit die Standzeit herabgesetzt würde. Dieses Vlies ist als Vliesmantel ausgebildet, so daß ein zusätzlicher Stützring zwischen dem Filterelement und dem Vliesmantel nicht erforderlich ist. Damit entfällt auch hier die Erhöhung des Durchflußwiderstandes aufgrund eines solchen zusätzlichen Stützringes. Der Vliesmantel hat eine Dicke von 2 bis 2,5 mm und beansprucht deshalb nur einen sehr geringen Raum innerhalb des Filtereinsatzes.

Es ist zwar bekannt, ein Filtereinsatz als Vliesfilter zu verwenden. Ein solcher Filtereinsatz ist als separates Teil aufgebaut und dient als Sicherheitselement, welches dem normalen Filtereinsatz nachgeschaltet ist. Dieses Sicherheitselement soll verhindern, daß bei einer Beschädigung des Hauptfiltereinsatzes Schmutz in das Luftansaugrohr der Brennkraftmaschine gelangt. Das Sicherheitselement wird jedoch nicht bei einem Wechsel des Filtereinsatzes mit ausgetauscht und dient deshalb nicht der Erhöhung des Anfangsabscheidungsgrades. Außerdem erfodert das Element, da es als separates Teil aufgebaut ist, wenigstens einen zusätzlichen Stützring, welcher wiederum den Durchgangswiderstand erhöht.

Gemäß einer Weiterbildung der Erfindung wird vorgeschlagen, den Vliesmantel aus Polyester oder Polyacrilnitrilfaser herzustellen. Der Vliesmantel wird mit einem als Haftmittel wirkenden Öl versehen. Gerade durch die Art des Haftmittels wird eine noch bessere Bindung des sehr feinen Staubes an dem Vliesmantel erzielt.

Zur Vermeidung von Beschädigungen und zur Verbesserung der Stabilität des Filtereinsatzes ist ein äußerer und ein innerer Stützring vorgesehen, wobei der innere Stützring an dem Vliesmantel anliegt.

Die Erfindung wird nachfolgend anhand eines Ausführungsbeispiels näher erläutert. Es zeigt:
- Figur 1: einen Filtereinsatz im Schnitt
- Figur 2: den Filtereinsatz der Figur 1 in Draufsicht
- Figur 3: ein Diagramm zur Darstellung des Abscheidungsgrades

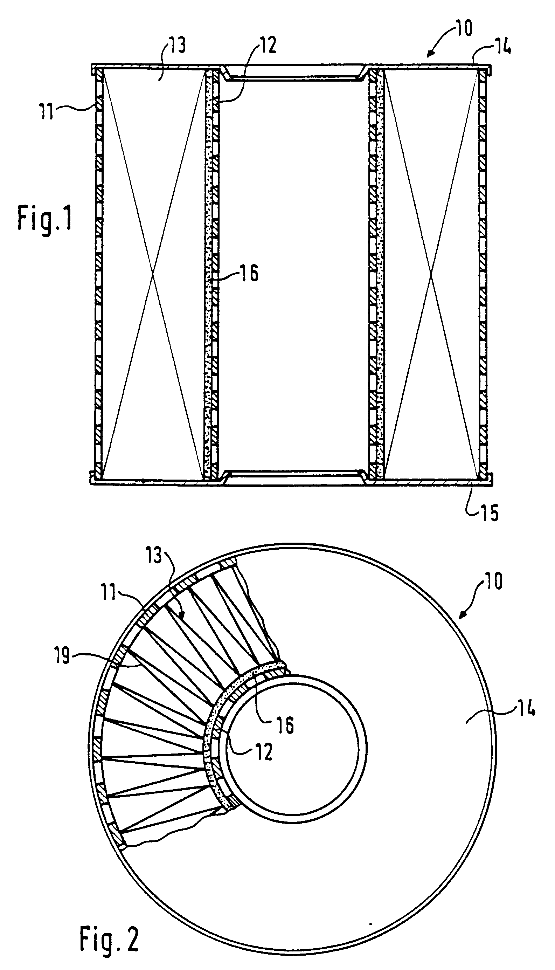

Der Filtereinsatz 10 gemäß Figur 1 und 2 hat einen äußeren Stützring 11 und einen inneren Stützring 12. Beide Stützringe bestehen beispielsweise aus gelochtem Blech. Ein Filterring 13, bestehend aus zickzackförmig gefaltetem Filterpapier 19, ist zwischen den beiden Stützringen 11 und 12 vorgesehen. Sowohl der Filterring 13 als auch die beiden Stützringe 11 und 12 sind an den Stirnseiten mittels Klebstoff fest mit ringförmigen Endscheiben 14, 15 verbunden, so daß die Stirnseiten des Filtereinsatzes dicht verschlossen sind. Im Betrieb wird der Filtereinsatz radial von außen nach innen durchströmt.

Zwischen dem Filterring 13 und dem Stützring 12 ist ein Vliesmantel 16 eingelegt, welcher sich über die gesamte axiale Länge des Filtereinsatzes erstreckt und ebenfalls an den Endscheiben 14, 15 befestigt ist. Dieser Vliesmantel ist rohrförmig ausgebildet und stützt die inneren Falten des Filterrings 13 aufgrund der Steifigkeit des verwendeten Materials, welches beispielsweise Polyester- oder Polyacrilnitrilfasermaterial ist, ab.

Eine radiale Durchströmung des Filtereinsatzes von innen nach außen ist ebenfalls möglich. In diesem Fall wird der Vliesmantel an den äußeren Umfang des Filterrings 13 angelegt. Sowohl bei einem innen als auch bei einem außen angeordneten Vliesmantel liegen die Falten des Filterrings am Vliesmantel an. Die Abstützung des Vliesmantels erfolgt jeweils über den sich daran anschließenden Stützring 11 bzw. 12.

Zur besseren Bindung des Staubes wird der Vliesmantel mit Haftmittel getränkt. Wie aus den Figuren 1 und 2 ersichtlich, weist der Vliesmantel nur eine sehr geringe Dicke auf, die sich in der Größenordnung von 2 bis 2,5 mm bewegt. Aufgrund dieser geringen Dicke wird bei gleichen Außenabmessungen des Filtereinsatzes die wirksame Filterfläche des Filterrings 13 nur unwesentlich kleiner. Der Vliesmantel ist daher eine sehr platzsparende Lösung, die dazu geeignet ist, den Abscheidungsgrad zu erhöhen.

Es hat sich gezeigt, daß der Durchflußwiderstand aufgrund der Anwendung des Vliesmantels nur geringfügig ansteigt. Dadurch, daß der Vliesmantel selbst als Stütze für den Fiterring 13 wirkt, ist ein zusätzlicher Stützring zwischen dem Filterring 13 und dem Vliesmantel 16, welcher den Durchflußwiderstand beeinträchtigen könnte, nicht erforderlich.

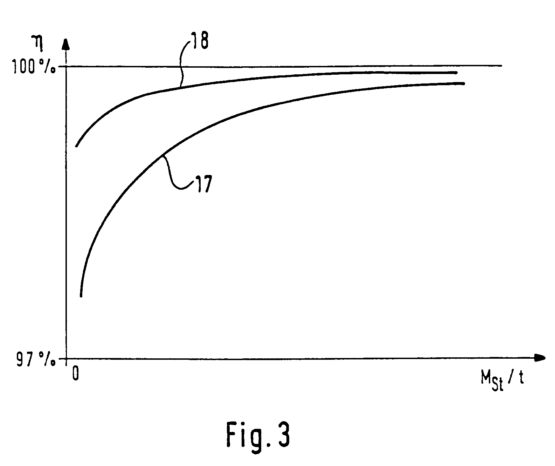

In Figur 3 ist ein Diagramm dargestellt, welches den Staubabscheidungsgrad in Abhängigkeit von der Betriebsdauer des Filtereinsatzes zeigt. Auf der Ordinate ist der Staubabscheidungsgrad Eta zwischen den Werten 97% und 100% aufgetragen, die Abszisse zeigt die Bestaubungszeit ausgehend von dem Beginn des Einsatzzeitpunktes des Filters. Im Laufe dieser Zeit sammelt sich auf dem Filtereinsatz eine Staubmenge M_{St} an. Unter der Annahme, daß die Bestaubung des Filters konstant ist, kann die auf den Filter aufgebrachte Staubmenge als proportional zu der Einsatzzeit gesehen werden.

Der Kurvenverlauf 17 zeigt den Abscheidungsgrad Eta eines Filtereinsatzes, welcher lediglich einen Filterring 13 aufweist. Dieser Abscheidungsgrad ist in der Anfangsphase relativ gering, da sich auf dem Filterpapier noch kein Filterkuchen gebildet hat.

Der Kurvenverlauf 18 zeigt den Abscheidungsgrad Eta bei einem Filtereinsatz gemäß den Figuren 1 und 2. Es ist zu erkennen, daß der Abscheidungsgrad wesentlich höher als bei dem Kurvenverlauf 17 ist. Es zeigt sich, daß die Anwendung eines Vliesmantels geeignet ist, in der Anfangsphase der Einsatzzeit die kleinen Staubpartikel zurückzuhalten, die von dem Filterpapier noch durchgelassen werden. Nach längerer Betriebsdauer des Filtereinsatzes sind nur noch geringe Unterschiede bezüglich des Staubabscheidungsgrades festzustellen, wobei jedoch der Staubdurchgang auch nach längerer Betriebsdauer etwa halbiert wird. Das Diagramm zeigt, daß bei einem sehr häufigen Wechsel des Filtereinsatzes, bei dem jeder neue Filtereinsatz diese Anfangsphase durchläuft, eine nicht unerhebliche Staubmenge durch die Anwendung des Vliesmantels zurückgehalten werden kann.

## Patentansprüche

1. Filtereinsatz für Filter von Brennkraftmaschinen, Kompressoren und sonstigen luftansaugenden Maschinen mit
- einem Filterring (13), der aus zickzackförmig gefaltetem Filterpapier (19) besteht und stirnseitige Endscheiben (14, 15) aufweist, wobei der Filterring (13) radial durchströmt ist,
- einem weiteren Filterelement, welches konzentrisch zu dem Filterring (13) angeordnet ist und sich innerhalb der ringförmigen Öffnung des Filterrings (13) befindet,
- wobei das weitere Filterelement ein Vliesmantel (16) aus Kunstfaservlies ist, welcher unmittelbar, ohne Zwischenschaltung von Stützringen, an dem Filterring (13) anliegt, dadurch gekennzeichnet, daß
- die Dicke des Vliesmantels (16) das Zwei- bis Achtfache der Dicke des Filterpapiers (19) beträgt,
- der Vliesmantel mit einem als Haftmittel wirkenden Öl versehen ist,

2. Filtereinsatz nach Anspruch 1, dadurch gekennzeichnet, daß der Vliesmantel (16) ein Kunstfaservlies ist, welches aus Polyester- oder Polyacrilnitrilfasermaterial besteht.

3. Filtereinsatz nach Anspruch 1 oder 2, dadurch
gekennzeichnet, daß ein erster Stützring (11) am Außenumfang des Filterrings (13) angeordnet ist und ein weiterer Stützring (12) an der Innenseite des Vliesmantels (16) angeordnet ist.

## Claims

1. Filter insert for filters of internal combustion engines, compressors and other air-intaking machines, having
- a filter ring (13), which is formed from filter paper (19), folded in a zig-zag manner, and includes end plates (14, 15) on its end faces, the filter ring (13) being radially traversed,
- an additional filter element which is disposed concentrically relative to the filter ring (13) and situated internally of the annular aperture in the filter ring (13),
- the additional filter element being a covering (16), which is formed from non-woven synthetic fibrous material and directly abuts against the filter ring (13) without the interposition of supporting rings, characterised in that
- the thickness of the covering of non-woven material (16) is between two- and eight-times the thickness of the filter paper (19), and
- the covering of non-woven material is provided with an oil which acts as an adhesive.

2. Filter insert according to claim 1, characterised in that the covering of non-woven material (16) is a non-woven synthetic fibrous material which is formed from polyester or polyacrylonitrile fibrous material.

3. Filter insert according to claim 1 or 2, characterised in that a first supporting ring (11) is disposed on the external periphery of the filter ring (13), and an additional supporting ring (12) is disposed on the internal surface of the covering of non-woven material (16).

## Revendications

1. Elément de filtrage pour des filtres de moteurs à combustion interne, des compresseurs et autres machines aspirant de l'air, comprenant :
- une couronne de filtrage (13) formée de papier filtre (19) replié en Zigzag et ayant sur ses faces frontales des disques d'extrémité (14, 15), la couronne de filtrage (13) étant traversée radialement par le flux,
- un autre élément de filtrage placé concentriquement à la couronne de filtrage (13) et se trouvant à l'intérieur de l'ouverture annulaire de la couronne de filtrage (13),
- cet autre élément de filtrage étant une enveloppe de non tissé (16) en fibres synthétiques, appliquée directement contre la couronne de filtrage (13) sans interposition d'une bague d'appui,
caractérisé en ce que
- l'épaisseur de l'enveloppe de matière non tissée (16) représente entre deux et huit fois l'épaisseur du papier filtre (19),
- l'enveloppe de matière non tissée est chargée d'huile, jouant le rôle d'un moyen de fixation.

2. Elément de filtrage selon la revendication 1, caractérisé en ce que l'enveloppe de matière non tissée (16) est une nappe de fibres synthétiques composées de fibres de polyester ou de polyacrylonitrile.

3. Elément de filtrage selon la revendication 1 ou 2, caractérisé par une première bague d'appui (11) prévue à la périphérie extérieure de la couronne de filtrage (13) et une autre bague d'appui (12) est disposée sur la face intérieure de l'enveloppe de matière non tissée (16).
